# EUROPÄISCHE PATENTSCHRIFT

(11) **EP 1 379 862 B1**
(45) Veröffentlichungstag und Bekanntmachung des Hinweises auf die Patenterteilung: **30.12.2009**
(21) Anmeldenummer: 02747284.4
(22) Anmeldetag: 16.04.2002
(51) Int. Cl.: G01N 27/403

(54) **MESSELEKTRODENPAAR, BIOSENSOR MIT EINEM SOLCHEN MESSELEKTRODENPAAR UND VERFAHREN ZUR HERSTELLUNG**
PAIR OF MEASURING ELECTRODES, BIOSENSOR COMPRISING SUCH A PAIR OF MEASURING ELECTRODES AND METHOD FOR THE PRODUCTION THEREOF
PAIRE D'ELECTRODES DE MESURE, BIODETECTEUR COMPORTANT UNE TELLE PAIRE D'ELECTRODES DE MESURE ET PROCEDE DE PRODUCTION DE CETTE DERNIERE

(30) Priorität: 17.04.2001 DE 10120083
(43) Veröffentlichungstag der Anmeldung: 14.01.2004
(73) Patentinhaber: NMI NATURWISSENSCHAFTLICHES UND MEDIZINISCHES INSTITUT AN DER UNIVERSITÄT TÜBINGEN, 72770 Reutlingen (DE)
(72) Erfinder: STELZLE, Martin, 72776 Reutlingen (DE); NISCH, Wilfried, 72070 Tübingen (DE)
(74) Vertreter: Otten, Hajo
(86) Internationale Anmeldenummer: PCT/EP2002/004222
(87) Internationale Veröffentlichungsnummer: WO 2002/084272

(56) Entgegenhaltungen:
- WO-A-00/62047
- MUSIL C R ET AL: "NANOSTRUCTURING OF GOLD ELECTRODES FOR IMMUNOSENSING APPLICATIONS" JOURNAL OF VACUUM SCIENCE AND TECHNOLOGY: PART B, AMERICAN INSTITUTE OF PHYSICS. NEW YORK, US, Bd. 13, Nr. 6, 1. November 1995 (1995-11-01), Seiten 2781-2786, XP000558353 ISSN: 0734-211X in der Anmeldung erwähnt
- NAGALE M P ET AL: "INDIVIDUALLY ADDRESSABLE, SUBMICROMETER BAND ELECTRODE ARRAYS. 1. FABRICATION FROM MULTILAYERED MATERIALS" ANALYTICAL CHEMISTRY, AMERICAN CHEMICAL SOCIETY. COLUMBUS, US, Bd. 70, Nr. 14, 15. Juli 1998 (1998-07-15), Seiten 2902-2907, XP000778886 ISSN: 0003-2700
- NIWA O ET AL: "HIGHLY SENSITIVE AND SELECTIVE VOLTAMMETRIC DETECTION OF DOPAMINE WITH VERTICALLY SEPARATED INTERDIGITATED ARRAY ELECTRODES" ELECTROANALYSIS, VHC PUBLISHERS, INC, US, Bd. 3, 1991, Seiten 163-168, XP000863401 ISSN: 1040-0397 in der Anmeldung erwähnt

## Beschreibung

Die vorliegende Erfindung betrifft ein Meßelektrodenpaar, einen Biosensor mit zumindest einem derartigen Meßelektrodenpaar, eine elektrochemische Zelle mit einem derartigen Biosensor sowie ein Verfahren zur Herstellung des Meßelektrodenpaares.

Die WO 95/28634 beschreibt ein Meßelektrodenpaar mit einer ersten und einer zweiten Elektrode sowie einer dazwischen liegenden isolierenden, porösen Membran,
wobei zumindest eine der beiden Elektroden porös und für Flüssigkeiten durchlässig ist. Für die asymmetrische Membran ist eine Porengröße von 0,2 bis 0,5 µm und eine Dicke von 30 bis 180 µm erwähnt. ,

Meßelektrodenpaare und Biosensoren sind aus dem Stand der Technik vielfach bekannt; siehe z.B. WO 99/07879, WO 00/62047 oder WO 00/62048 sowie die dort beschriebenen unterschiedlichsten Anwendungs- und Einsatzmöglichkeiten.

Die in diesen Druckschriften beschriebenen Biosensoren weisen Arrays von einzeln adressierbaren Meßelektrodenpaaren auf, von denen jedes zwei in einer Ebene parallel zueinander angeordnete Elektroden aufweist, die als ineinander verschränkte Finger, sog, interdigitierende Elektroden, oder als ineinander verschachtelte, konzentrische Kreisabschnitte ausgebildet sein können.

Die bekannten Biosensoren dienen z.B. zur Bestimmung von Konzentrationen von Biomolekülen, zur Ermittlung von physikochemischen Eigenschaften, zur Detektion von Immunreaktionen und dergl. Allgemein werden derartige Biosensoren in analytischen oder immunologischen Assays verwendet, wo sie zur Messung geringster Konzentrationen als amperometrische Sensoren eingesetzt werden. Die Meßelektroden können jedoch auch zur Elektrostimulation, zur elektrophoretischen Anreicherung oder Separation geladener Moleküle oder bspw. zur elektrochemischen Erfassung von Reaktionsabläufen eingesetzt werden.

Die erwähnten amperometrischen Sensoren detektieren Ströme, die von Oxidations- bzw. Reduktionsreaktionen an Molekülen in Lösung in der Nähe der Elektroden herrühren. Eine Selektivität für eine bestimmte Molekülspezies kann erreicht werden, weil bestimmte redoxaktive Moleküle bei einem bestimmten Potential reduziert bzw. oxidiert werden. Der gemessene Strom ist proportional zu der Konzentration der Moleküle in der Lösung.

Je nach Art der betreffenden Reaktion beträgt die übertragene Ladung pro Molekül eine oder wenige Elementarladungen, wobei durch sogenanntes *redox-recycling* die Sensitivität gesteigert werden kann. Zu diesem Zweck werden die Elektroden in sehr geringem Abstand zueinander angeordnet, so daß ein redoxaktives Molekül mit hoher Wahrscheinlichkeit zwischen der Anode für die Oxidationsreaktion und der Kathode für die Reduktionsreaktion hin und her diffundieren kann. Dabei nimmt das Molekül an der Kathode mehrfach Ladung auf (Reduktion) und gibt sie an der anderen Elektrode, der Anode wieder ab (Oxidation); siehe Niwa et al., Electroanalysis 3 (1991), 163-168.

Um das redox-recycling nutzen zu können, müssen die Abmaße und der Abstand der Elektroden zueinander möglichst gering sein, um eine schnelle Diffusion der Moleküle zwischen Anode und Kathode zu ermöglichen. Niwa et al., a.a.O., beschreiben in diesem Zusammenhang zwei unterschiedliche Elektrodenanordnungen, bei denen die Abstände zwischen Anode und Kathode sowie die Breiten von Anode und Kathode bis herunter auf 1µm gehen und die Länge 2 mm beträgt. In einer Ausführungsform liegen bis zu 100 interdigitierende Finger in einer Ebene nebeneinander, während bei der anderen Ausführung Anode und Kathodenfinger vertikal durch eine Isolation beabstandet sind, so daß ein regelmäßig strukturiertes Array mit Mikrostreifen entsteht. Die Elektroden werden durch konventionelle Photolitographie- und Ätztechniken hergestellt.

Um die bei der vertikalen Anordnung nicht ausreichende Selektivität zu erhöhen, schlagen die Autoren eine weitere Verringerung der Abmaße oder den Einsatz selektiver Polymere vor.

Vor diesem Hintergrund liegt der vorliegenden Erfindung die Aufgabe zugrunde, ein Meßelektrodenpaar der eingangs genannten Art zu schaffen, das eine sehr hohe Sensitivität aufweist sowie einfach und preiswert herzustellen ist.

Diese Aufgabe wird erfindungsgemäß gelöst durch ein Meßelektrodenpaar mit einer ersten und einer zweiten, vorzugsweise jeweils flächigen Elektrode sowie einer zwischen den Elektroden angeordneten Isolationsschicht, bei dem in der zweiten Elektrode eine oder mehrere Nanoporen vorgesehen sind, die sich durch die Isolationsschicht bis zur ersten Elektrode erstrecken, deren Oberfläche in den Nanoporen zumindest teilweise freiliegt, wobei die Nanoporen eine lichte Weite von ca. 20 bis 1000 nm, vorzugsweise von ca. 100 nm haben, und die Isolationsschicht eine Dicke von ca. 10 bis ca. 200 nm, vorzugsweise von ca. 50 nm hat.

Die der Erfindung zugrunde liegende Aufgabe wird auf diese Weise vollkommen gelöst.

Der Erfinder der vorliegenden Anmeldung hat nämlich erkannt, daß es möglich ist, die Meßelektrodenpaare aus jeweils zwei vorzugsweise flächigen Elektroden aufzubauen, die parallel angeordnet und durch eine Isolationsschicht zueinander beabstandet sind, sowie in der oberen Elektrode Nanoporen vorzusehen, die durch die Isolationsschicht bis hinunter zur unteren Elektrode reichen, die somit teilweise in die Nanoporen exponiert ist. Unter "Nanoporen" werden im Rahmen der vorliegenden Erfindung Öffnungen oder Vertiefungen verstanden, die im Querschnitt nicht zwingend eine kreisförmige oder anderweitig regelmäßige Form aufweisen und eine lichte Weite im Bereich von 20 bis 1000 nm, vorzugsweise von ca. 100 nm haben. Die Tiefe der Nanoporen wird im wesentlichen durch die Dicke der Isolationsschicht bestimmt, die 10 bis 200 nm, vorzugsweise ca. 50 nm beträgt.

Die Nanoporen müssen nicht regelmäßig angeordnet sein, sie können sowohl unregelmäßig als auch statistisch regelmäßig angeordnet sein. Die Zahl der Nanoporen pro Flächeneinheit, also ihre Dichte kann in großem Bereich variieren, solange gewährleistet ist, daß die löchrige obere Elektrode lateral noch leitfähig bleibt und benachbarte Nanoporen durch verbliebenes Material der Isolationsschicht voneinander getrennt sind.

Der Erfinder hat erkannt, daß es durch die Abkehr von den üblichen Fingerelektroden möglich ist, Meßelektrodenpaare insbesondere für Biosensoren zu schaffen, die eine sehr hohe Sensitivität und Selektivität aufweisen, da nicht nur der Abstand zwischen den Elektroden nahezu beliebig klein sein kann, sondern durch die große Zahl der möglichen Nanoporen pro Meßelektrodenpaar auch eine extrem hohe Anzahl von Molekülen im redox-recycling zum Meßstrom beiträgt. Durch den geringen Durchmesser der Nanoporen und die geringe Dicke der Isolationsschicht ergeben sich weiter sehr kurze Diffusionswege, so daß die Moleküle in einer Zeiteinheit sehr oft Ladung aufnehmen und wieder abgeben können, was ebenfalls zur Erhöhung der Sensitivität beiträgt.

Dabei ist es bevorzugt, wenn die Elektroden einen Durchmesser von ca. 1 µm bis ca. 10 mm, vorzugsweise von ca. 10 µm haben,
wobei das Meßelektrodenpaar vorzugsweise auf einem isolierenden Substrat aufgebracht ist, das weiter vorzugsweise Glas, Silizium/Siliziumoxid oder ein Polymer umfaßt. Die Elektroden können dabei Metall, vorzugsweise Gold, Platin, Palladium, Iridium oder Kohlenstoff bzw. eine Kohlenstoffverbindung enthalten, wobei die Isolationsschicht vorzugsweise eine Siliziumverbindung oder eine Polymerschicht aufweist.

In einem Ausführungsbeispiel ist es bevorzugt, wenn die Nanoporen einen Anteil an der Oberfläche der ersten Elektrode von mindestens ca. 5%, vorzugsweise mehr als 60% ausmachen.

In einer weiteren Ausgestaltung des erfindungsgemäßen Meßelektrodenpaares sind lediglich eine oder wenige Nanoporen pro Meßelektrodenpaar vorgesehen. Diese Ausgestaltung zielt auf eine Anwendung, bei der Redoxprozesse an einzelnen Molekülen durch Messung von Fluktuationen im Stromsignal detektiert werden sollen, um Aufschluß über Diffusion und Kinetik des Redoxprozesses zu gewinnen. Hierzu ist es erforderlich, daß in der Elektrodenstruktur, die hinsichtlich ihrer äußeren Abmessungen im Hinblick auf den Kostengesichtspunkt noch in Mikrometermaßstab liegen kann, nur eine oder sehr wenige Nanoporen liegen, die zum Gesamtstrom beitragen. Bei dieser Ausgestaltung wird die Amplitude von Fluktuationen relativ zum Mittelwert des Meßstromes dann so groß, daß sie meßbar ist. Für bestimmte Anwendungen ist es also bevorzugt und vorteilhaft, wenn nur eine oder wenige Nanoporen in dem Meßelektrodenpaar vorhanden sind. Die Anzahl von Nanoporen läßt sich in dem weiter unten beschriebenen Herstellungsverfahren leicht einstellen.

Bei dieser Ausgestaltung ist es mit dem neuen Meßelektrodenpaar möglich, Stromfluktuationen zu messen, um Diffusion und Kinetik von Redoxmolekülen aufzuklären.

Gegenstand der vorliegenden Erfindung ist auch ein Biosensor mit zumindest einem derartigen Meßelektrodenpaar, eine elektrochemische Zelle mit einem derartigen Biosensor, die einen Aufnahmeraum für einen Elektrolyten aufweist, in dem mit dem Biosensor zu erfassende Moleküle vorhanden sind, sowie die Verwendung des neuen Meßelektrodenpaares zur Erfassung von Molekülen unter Ausnutzung von redox-Recycling.

Der Biosensor kann eine Vielzahl der neuen Meßelektrodenpaare enthalten, die alle durch eigene Zuleitungen ausgelesen werden können. Die Abfrage der Meßelektrodenpaare erfolgt vorzugsweise über eine Potentiostatenschaltung, deren Referenz- und Gegen-elektrode entweder in einer elektrochemischen Zelle, in der sich der Biosensor befindet und in die ein Elektrolyt mit zu vermessenden Molekülen gegeben wird, oder auf dem Biosensor selbst angeordnet sein können.

Allgemein ist es bevorzugt, wenn bei dem Biosensor auf dem Substrat zumindest eine weitere Elektrode vorgesehen ist, die als Referenz- oder Gegenelektrode dient, und vorzugsweise eine Fläche aufweist, die größer, vorzugsweise mindestens 10fach größer, ist als die Fläche der zweiten Elektrode. Der Biosensor ist in einem Ausführungsbeispiel als Chip mit Zuleitungen für die Elektroden ausgebildet.

In einem Ausführungsbeispiel weist die elektrochemische Zelle Anschlüsse für eine Ausleseschaltung, vorzugsweise eine Potentiostatenschaltung auf.

Die Spezifität für zu untersuchende Redoxmoleküle kann durch Beschichtung der Poren und/oder Elektroden eingestellt werden. Hierbei ist es möglich Monolayer, Polymerschichten, insbesondere Polyelektrolytschichten und Hydrogele einzusetzen. Das Verfahren der Elektropolymerisation ist dabei besonders bevorzugt, da sich eine Lokalisierung der Beschichtung spezifisch auf den Elektroden und in den Nanoporen automatisch durch die Stromapplikation induzieren läßt. Die Nanoporen können dabei mit einer ionenselektiven Membran oder mit einer Membran mit eingeschlossenen Enzymen beschichtet werden. Für eine Sensoranwendung kann auch eine Beschichtung mit Polymer und eine Einbettung redoxaktiver Moleküle durch Elektropolymerisation vorgesehen sein.

Das neue Meßelektrodenpaar kann auch als Mikrosensor für Mikroelektrodenanordnungen zur Anwendung kommen, um Neurotransmitter und Stickoxide (NO) zu detektieren. Die Herstellung der Meßelektrodenpaare ist einfach in den Prozeß zur Herstellung der Mikroelektrodenanordnungen integrierbar. Dabei ergibt sich als Vorteil die hohe Sensitivität durch die Nanoporen, wobei weiter als Vorteil ausgenutzt werden kann, daß ein physiologisches Signal in Form der Konzentration chemischer Substanzen gemessen werden kann.

Die neuen Meßelektrodenpaare können grundsätzlich auf verschiedenen Wegen hergestellt werden. Die Ansprüche 15 bis 18 betreffen bevorzugte Herstellungsverfahren.

Es ist möglich, folgendes Verfahren zur Herstellung des Meßelektrodenpaares anzuwenden:
a) Aufbringen einer ersten, vorzugsweise flächigen Elektrode auf einem isolierenden Substrat, wobei die Elektrode vorzugsweise eine Schichtdicke von ca. 50 bis ca. 1000 nm, besonders vorzugsweise von ca. 100 bis 200 nm aufweist,
b) Aufbringen einer Isolationsschicht auf der ersten Elektrode,
c) Maskieren der Isolationsschicht mit einer nanostrukturierten Schattenmaske aus Nanopartikeln, die vorzugsweise einen Durchmesser von 20 bis 1000 nm, besonders vorzugsweise von ca. 100 nm aufweisen,
d) Aufbringen einer zweiten Elektrode auf der Isolationsschicht, wobei im Bereich der Nanopartikel kein Elektrodenmaterial abgelagert wird, wobei die Elektrode eine Schichtdicke im Bereich des Radius der Nanopartikel, vorzugsweise eine Schichtdicke von ca. 20 bis ca. 500 nm, besonders vorzugsweise von ca. 50 nm aufweist,
e) Entfernen der Nanopartikel, und
f) Ätzen der Isolationsschicht bis zur ersten Elektrode, wobei die zweite Elektrode als Ätzmaske dient.

Bei diesem Verfahren ist von Vorteil, daß es für die Strukturierung der Nanoporen ohne Photolitographie oder Elektronenstrahllitographie auskommt und sehr einfach und preiswert durchzuführen ist. Das neue Verfahren ermöglicht dabei einfach zu realisierende, extrem kleine Elektrodenabstände und eine entsprechend hohe Effizienz des redox-recycling, also eine hohe Sensitivität.

Bei diesem Verfahren wird also auf einem Substrat zunächst eine erste, flächige Elektrode aufgebracht, auf der dann eine Isolationsschicht aufgebracht wird. Für die Mikrostrukturierung der Umrisse der ersten Elektrode kann eine konventionelle Photolithographie eingesetzt werden. Auf der Isolationsschicht wird dann eine strukturierte Schattenmaske aus Nanopartikeln abgelagert, bevor die zweite, flächige Elektrode aufgebracht wird. Nach dem Entfernen der Nanopartikel bleibt eine nanostrukturierte obere Elektrode zurück, die dann als Ätzmaske verwendet wird, um die Isolationsschicht selektiv im Bereich der Öffnungen in der oberen Elektrode zu ätzen. Der Ätzprozeß kommt an der unteren Elektrode zum Stehen, so daß sich Nanoporen bilden, in die die untere Elektrode teilweise exponiert ist.

Die Nanopartikel werden vorzugsweise aus einer Lösung abgelagert, wo sie sich durch einen Selbstorganisationsprozeß regelmäßig, statistisch verteilt ablagern.

Durch die Konzentration von Nanopartikeln in der Lösung läßt sich die Dichte der als Schattenmasken wirkenden Nanopartikel auf der Isolationsschicht einstellen. Einerseits kann es nämlich für Sensoranwendungen vorteilhaft sein, eine möglichst hohe Dichte von Nanoporen zu erzeugen, um eine hohe Stromdichte zu erzielen. Andererseits ist es zur Beobachtung von Redox-Prozessen an einzelnen Molekülen vorteilhaft, eine Sensorelektrode mit nur einer oder wenigen Nanoporen zu realisieren.

Ein Verfahren zur Herstellung von nanostrukturierten Elektroden für Messungen an immobilisierten Biomolekülen ist aus den Veröffentlichungen von Musil et al., J. Vac. Sci. Technol. 13 (1995), 2781 - 2786, sowie Padeste et al., J. Electrochem. Soc. 143 (1996), 3890 - 3895 bekannt.

Bei dem bekannten Verfahren werden Goldelektroden auf einem isolierenden Substrat abgelagert, das als Schattenmaske statistisch verteilte Nanopartikel enthält. Nach dem Entfernen der Nanopartikel bleibt eine Goldelektrode mit unregelmäßig angeordneten Löchern zurück, in denen das Substrat freiliegt. In den Löchern werden auf dem Substrat Analytmoleküle wie bspw. Antikörper immobilisiert, die auf diese Weise sehr nahe bei der Ausleseelektrode angeordnet werden können. Beide Veröffentlichungen beschäftigen sich weder mit Meßelektrodenpaaren noch mit redox-recycling.

Es ist auch möglich, für die Herstellung des neuen Meßelektrodenpaares folgendes Verfahren anzuwenden, durch das die der Erfindung zugrunde liegende Aufgabe auch gelöst wird:
a) Aufbringen einer ersten, vorzugsweise flächigen Elektrode auf einem isolierenden Substrat, wobei die Elektrode vorzugsweise eine Schichtdicke von ca. 50 bis ca. 1000 nm, besonders vorzugsweise von ca. 100 bis 206 nm aufweist,
b) Maskieren der ersten Elektrode mit einer nanostrukturierten Schattenmaske aus Nanopartikeln, die vorzugsweise einen Durchmesser von 10 bis 1000 nm, besonders vorzugsweise von ca. 100 nm aufweisen,
c) Aufbringen einer Isolationsschicht auf der ersten Elektrode, wobei im Bereich der Nanopartikel kein Isolationsmaterial abgelagert wird,
d) Aufbringen einer zweiten Elektrode auf der Isolationsschicht, wobei im Bereich der Nanopartikel kein Elektrodenmaterial abgelagert wird, wobei die Elektrode eine Schichtdicke im Bereich des Radius der Nanopartikel, vorzugsweise eine Schichtdicke von ca. 20 bis ca. 500 nm, besonders vorzugsweise von ca. 50 nm aufweist, und
e) Entfernen der Nanopartikel.

Alternativ zum oben beschriebenen Aufbringen der Nanopartikel auf der Isolationsschicht als Schattenmaske für die Elektrodenabscheidung werden hier die Nanopartikel bereits auf die erste Elektrode aufgebracht. Danach werden Isolationsschicht und zweite Elektrode abgeschieden und die Nanopartikel wieder gelöst. Damit werden die Isolationsschicht und die zweite Elektrode direkt strukturiert, die Nanoporen sind danach bereits vollständig fertiggestellt, der Ätzprozeß aus dem Schritt f) bei dem anderen Verfahren entfällt.

Als nanostrukturierte Schattenmaske können entweder aus einer Lösung abgeschiedene Nanopartikel verwendet werden, es ist jedoch auch möglich, eine mikrotechnisch hergestellte Schattenmaske, also ein Gitter mit Nanoporen zu verwenden, durch das bedampft oder gesputtert wird, wobei eine nachfolgende Invertierung der so erzeugten Inselstruktur durch bekannte Prozesse der Dünnschicht- und Mikrostrukturtechnik erfolgen kann. Die Nanostrukturierung kann auch durch Aufbringen einer Maske in einem Stempelprozeß (Nanoprinting) oder durch einen Abformprozeß mit nanostrukturiertem Stempel (Nanoimprinting) erfolgen.

Der Vorteil liegt hier darin, daß Schattenmaske bzw. Stempel nur einmal mit hochauflösenden Lithographiemethoden hergestellt werden müssen, danach aber für die Fertigung einer großen Stückzahl von Sensoren eingesetzt werden können. Da es lediglich auf die Ausdehnung der Nanoporen, nicht jedoch auf ihre absolute Position auf der Elektrode ankommt, ist keine besonders genaue Justage des Werkzeuges erforderlich und der Herstellungsprozeß ist entsprechend kostengünstig.

Ein weiteres Herstellungsverfahren umfaßt die Schritte:
a) Aufbringen einer ersten, vorzugsweise flächigen Elektrode auf einem isolierenden Substrat, wobei die Elektrode vorzugsweise eine Schichtdicke von ca. 50 bis ca. 1000 nm, besonders vorzugsweise von ca. 100 bis 200 nm aufweist,
b) Aufbringen einer Isolationsschicht auf der ersten Elektrode,
c) Aufbringen einer nanostrukturierten zweiten Elektrode auf der Isolationsschicht, und
d) Ätzen der Isolationsschicht bis zur ersten Elektrode, wobei die zweite Elektrode als Ätzmaske dient.

Anstelle einer nanostrukturierten Schattenmaske zur Herstellung der zweiten Elektrode bzw. zur Verwendung als Ätzmaske läßt sich eine nanostrukturierte zweite Elektrode auch durch Aufdampfen oder Sputtern oder PECVD (plasma enhanced chemical vapor deposition) erzeugen. Bei Verwendung bekannter niederschmelzender Materialien wie z.B. Gold, Zinn, Silber, Indium entsteht bei Schichtdicken ab etwa 5-10 nm eine noch unvollständig bedeckende, lateral jedoch leitfähige Schicht. Es bilden sich bei diesem Prozeß zunächst Inseln, die mit zunehmender Schichtdicke zusammenwachsen. Eine solche Schicht ist in einem bestimmten Intervall der Schichtdicke, typischerweise ca. 10 bis 100 nm, lateral leitfähig, jedoch noch nicht vollständig geschlossen. Eine derartige nanostrukturierte Schicht kann ebenso wie die mit Hilfe von Nanopartikeln oder nanostrukturierten Schattenmasken erzeugten Schichten sowohl als Ätzmaske als auch als zweite Elektrode dienen. Von Vorteil ist hier, daß ein eigener Strukturierungsschritt entfällt, es müssen keine Nanopartikel oder sonstige nanostrukturierte Schattenmasken aufgebracht werden.

Diese Herstellung einer nanostrukturierten Schattenmaske kann wie folgt ablaufen:

Gold wird im Vakuum aus einem Graphittiegel verdampft und schlägt sich auf einem geeigneten Substrat nieder. Die Beschichtungsrate wird zu etwa 0,2-0,5 nm/s eingestellt. Als Substrat dient z.B. ein Film aus amorphem Kohlenstoff, wie es für die Schichtanalyse in der Transmissionselektronenmikroskopie gebräuchlich ist. Die Substrattemperatur beträgt 30°C. Unter diesen Bedingungen bilden sich zunächst isolierte Keime, die mit zunehmender Schichtdicke zusammenwachsen und eine lateral leitfähige, dabei jedoch nanoporöse Schicht bilden.

Ausführlich sind die hier zugrunde liegenden Prinzipien der Keimbildung und des Schichtwachstums beschrieben in: Constantine A. Neugebauer: Condensation, Nucleation, and Growth of Thin Films, in: Handbook of Thin Film Technology, Leon I. Maissel and Reinhard Glang (eds.), Kap. 8, S 32 ff. McGraw-Hill, 1970

Vorteilhafte Ausgestaltungen des neuen Verfahrens sowie des neuen Meßelektrodenpaares, des Biosensors und der elektrochemischen Zelle finden sich in den abhängigen Ansprüchen.

Es versteht sich, daß die vorstehend erwähnten Merkmale nicht nur in der angegebenen Kombination sondern auch in Alleinstellung oder in anderer Kombination verwendbar sind, ohne den Rahmen der vorliegenden Erfindung zu verlassen.

Weitere Vorteile und Merkmale ergeben sich aus der Beschreibung und der beigefügten Zeichnung, in der:
- Fig. 1: eine elektrochemische Zelle zeigt, in der ein Biosensor mit einem Meßelektrodenpaar im Querschnitt und ausschnittsweise nicht maßstabsgetreu und mit übertrieben dargestellten Abmaßen dargestellt ist;
- Fig. 2: den Biosensor aus Fig. 1 in der Draufsicht zeigt; und
- Fig. 3: eine Potentiostatenschaltung zur Auslesung der elektrochemischen Zelle aus Fig. 1 zeigt.

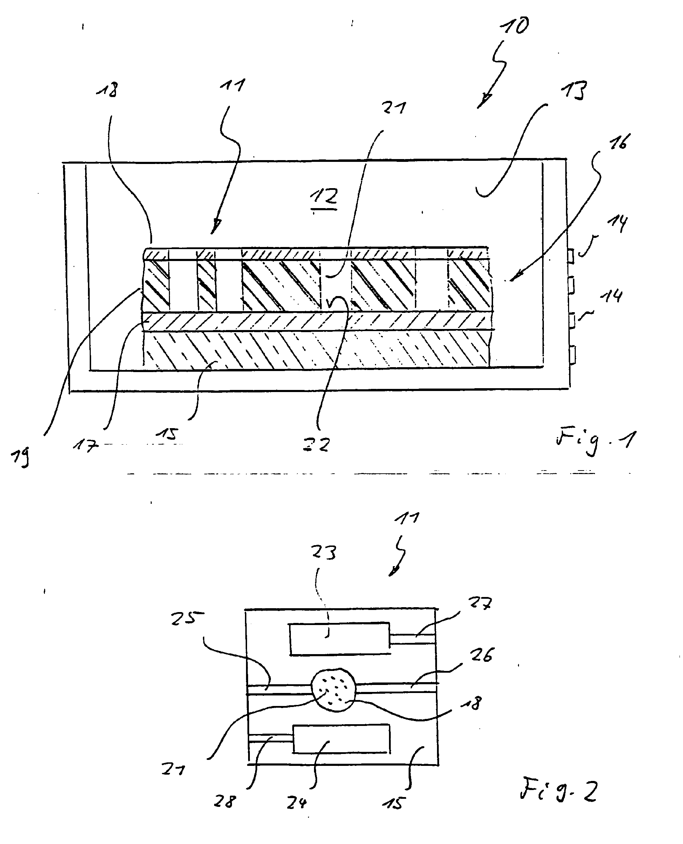

Fig. 1 zeigt stark schematisiert im Querschnitt eine elektrochemische Zelle 10, in der ein Biosensor 11 angeordnet ist, mit dem Moleküle in einem Elektrolyten 12 vermessen werden, der sich in einem Aufnahmeraum 13 der Zelle 10 befindet. Außen an der Zelle 10 sind Anschlüsse 14 angeordnet, über die der Biosensor 11 elektrisch angeschlossen werden kann.

Der Biosensor 11, der in vergrößerter, nicht maßstabsgetreuer Darstellung gezeigt ist, weist ein isolierendes Substrat 15 auf, auf dem ein Meßelektrodenpaar 16 aus unterer, erster Elektrode 17 und oberer, zweiter Elektrode 18 angeordnet ist. Zwischen den Elektroden 17, 18 ist eine Isolationsschicht 19 angeordnet, die diese beabstandet hält. In der zweiten Elektrode 18 und der Isolationsschicht 19 sind Nanoporen 21 zu finden, die bis zur Oberfläche 22 der ersten Elektrode 17 reichen, die in den Nanoporen 22 freiliegt. Die Nanoporen sind regelmäßig statistisch verteilt.

Ein Verfahren zur Herstellung eines derartigen Meßelektrodenpaares 17, 18 umfaßt die folgenden Schritte:

Aufbringen einer ersten, vorzugsweise flächigen Elektrode 17 auf einem isolierenden Substrat 15 aus Glas, Silizium/Siliziumoxid oder einer Polymerschicht, durch Sputtern oder Aufdampfen von Gold, Platin, Palladium, Iridium oder Kohlenstoff, wobei die Elektrode 17 vorzugsweise eine Schichtdicke von ca. 100 bis 200 nm aufweist. Bei Elektroden aus Kohlenstoff ist ein weiterer Potentialbereich zugänglich als mit Metallelektroden, so daß sie bei bestimmten Anwendungen bevorzugt werden.

Aufbringen einer Isolationsschicht 19 durch Sputtern oder Aufdampfen von Siliziumoxid oder Aufspinnen einer dünnen Polymerschicht auf der ersten Elektrode 17. Die Schichtdicke beträgt vorzugsweise ca. 50 nm.

Eine weitere Möglichkeit, Elektroden- und Isolationsschichten aufzubringen, ist PECVD (plasma enhanced chemical vapor deposition).

Als nächstes wird die Oberfläche der Isolationsschicht 19 vorbehandelt, um eine gleichmäßige Verteilung von Nanopartikeln auf der Oberfläche zu erreichen. Die Vorbehandlung hängt von der Art der Nanopartikel und dem Lösungsmittel ab, in dem sie auf die Oberfläche gebracht werden. Die Oberfläche kann z.B. hydrophob oder hydrophil gemacht werden, so daß sie besser benetzbar ist.

Maskieren der Isolationsschicht 19 mit einer Schattenmaske aus Nanopartikeln, die einen Durchmesser von ca. 100 nm aufweisen und in einer Lösung (Wasser, Ethanol, Toluol) vorliegen.

Anstelle einer Schattenmaske aus Nanopartikeln können auch Aufdampfpartikel, also Cluster, die sich in einer Schutzgasatmosphäre bilden, oder eine Maske verwendet werden, die durch Nanoprinting, Nanoimprinting oder Aufdampfen bzw. Sputtern durch eine mikrotechnisch gefertigte Maske mit Nanoporen hergestellt wird.

Aufbringen einer zweiten Elektrode 18 durch Sputtern oder Aufdampfen von Metall auf der Isolationsschicht 19, wobei im Bereich der Nanopartikel kein Elektrodenmaterial abgelagert wird. Die Elektrode 18 erhält eine Schichtdicke im Bereich des Radius der Nanopartikel, vorzugsweise von ca. 50 nm.

Entfernen der Nanopartikel, wozu die Elektrode 18 in einem Lösungsmittel mit Ultraschall beschallt wird, so daß sich die Nanopartikel (z.B. aus Latex) von der Oberfläche lösen.

Ätzen der Isolationsschicht 19 bis zur ersten Elektrode 17, wobei die zweite Elektrode 18 als Ätzmaske dient. Hier können Naßätzverfahren oder Trockenätzverfahren angewendet werden. Auf diese Weise werden die Nanoporen 21 erzeugt, in denen die Oberfläche 22 der ersten Elektrode 17 freiliegt.

Die Verfahren Sputtern, Aufdampfen und Ätzen sind dem Fachmann bekannt, hier wird auf die Fachliteratur verwiesen. Das Maskieren der Isolationsschicht 19 kann so erfolgen, wie dies bei Musil et. al., a.a.O., oder bei Padeste et al., a.a.O. beschrieben ist.

Fig. 2 zeigt den Biosensor 11 aus Fig.1 in einer nicht maßstabsgetreuen Draufsicht. Es ist zu erkennen, daß auf dem Substrat 15 weiter Elektroden 23, 24 vorhanden sind, die als Referenz- und Gegenelektrode für eine Potentiostatenschaltung dienen. Die weiteren Elektroden 23, 24 haben eine Fläche, die deutlich größer ist als die der zweiten Elektrode 18. Die Nanoporen 21 sind hier lediglich als Punkte auf der zweiten Elektrode 18 zu erkennen. Auf dem Substrat 15 sind ferner Zuleitungen 25, 26, 27, und 28 zu erkennen, die zu der ersten Elektrode 17, der zweiten Elektrode 18, und den weiteren Elektroden 23, bzw. 24 führen. Diese Zuleitungen werden mit den Anschlüssen 14 der Zelle 10 aus Fig. 1 verbunden, wenn den Biosensor 11 in die Zelle 10 eingesetzt wird.

Das in den Figuren 1 und 2 dargestellte Meßelektrodenpaar 16 kann auch zur Messung von Redox-Prozessen an einzelnen Molekülen eingesetzt werden. In diesem Falle werden in der zweiten Elektrode 18 sowie in der Isolationsschicht 19 nur eine oder wenige Nanoporen realisiert, während die Umrißabmessungen der Elektroden 17 und 18 wie bei dem Ausführungsbeispiel mit vielen Nanoporen im Mikrometerbereich liegen können. Die Elektrodenstruktur ist wegen ihrer äußeren Abmessungen im Mikrometermaßstab dann noch kostengünstig herzustellen, wegen der nur einen oder wenigen Nanoporen lassen sich jedoch Messungen von Fluktuationen des Stromsignales detektieren, um Aufschluß über Diffusion und Kinetik des Redox-Prozesses zu gewinnen.

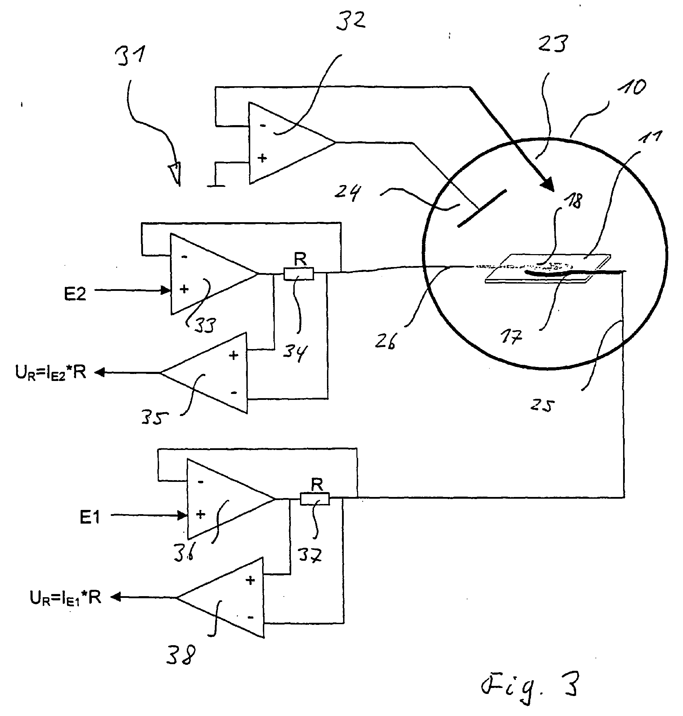

Fig. 3 zeigt die Zelle 10 aus Fig. 1 angeschlossen an eine Potentiostatenschaltung 31 zur Abfrage des Biosensors 11. Die Referenz- und die Gegenelektrode 23, 24 können statt auf dem Biosensor 11 auch in der Zelle 10 vorgesehen sein. Bezüglich der Funktion der Potentiostatenschaltung 31 wird auf die entsprechende, dem Fachmann zugängliche Literatur verwiesen.

Die Referenzelektrode 23 ist mit dem invertierenden Eingang eines Potentiostaten 32 verbunden, dessen nicht-invertierender Eingang auf Masse liegt. Der Ausgang des Potentiostaten 32 ist mit der Gegenelektrode 24 verbunden.

Die Zuleitung 26 zu der zweiten, oberen Elektrode 18 des Biosensors 11 ist an den Ausgang eines ersten gegengekoppelten Differenzverstärkers 33 unter zwischenschaltung eines Serienwiderstandes 34 verbunden. An den nicht-invertierenden Eingang des Differenzverstärkers 33 ist Sollpotential E2 angelegt, der invertierende Eingang ist mit der Zuleitung 26 verbunden.

Die über den Serienwiderstand 34 abfallende Spannung wird mit einem Differenzverstärker 35 gemessen, dessen Ausgang somit ein zum über die zweite Elektrode 18 fließenden Strom proportionales Spannungssignal liefert.

In entsprechender Weise ist die Zuleitung 25 mit einem Ausgang eines zweiten gegengekoppelten Differenzverstärkers 36 ebenfalls unter Zwischenschaltung eines Serienwiderstandes 37 verbunden. An den nicht-invertierenden Eingang des Differenzverstärkers 36 ist Soll-Potential E1 angelegt, der invertierende Eingang ist mit der Zuleitung 25 verbunden, die zu der ersten Elektrode 17 des Biosensors 11 führt.

Die Spannung über dem Serienwiderstand 37 wird mit einem Differenzverstärker 38 erfaßt, der an seinem Ausgang ein zum über die erste Elektrode 17 fließenden Strom proportionales Spannungssignal liefert.

## Patentansprüche

1. Messelektrodenpaar mit einer ersten und einer zweiten, vorzugsweise jeweils flächigen Elektrode (17, 18) sowie einer zwischen den Elektroden (17, 18) angeordneten Isolationsschicht (19), bei dem in der zweiten Elektrode (18) eine oder mehrere Nanoporen (21) vorgesehen sind, die sich durch die Isolationsschicht (19) bis zur ersten Elektrode (17) erstrecken, deren Oberfläche (22) in den Nanoporen (21) zumindest teilweise freiliegt, wobei die Nanoporen (21) eine lichte Weite von ca. 20 bis ca. 1000 nm, vorzugsweise von ca. 100 nm haben, und die Isolationsschicht (19) eine Dicke von ca. 10 bis ca. 200 nm, vorzugsweise von ca. 50 nm hat.

2. Messelektrodenpaar nach Anspruch 1, **dadurch gekennzeichnet, dass** die Nanoporen (21) regelmäßig, vorzugsweise statistisch verteilt angeordnet sind.

3. Messelektrodenpaar nach Anspruch 1 oder 2, **dadurch gekennzeichnet, dass** die Elektroden (17, 18) einen Durchmesser von ca. 1 µm bis ca. 10 mm, vorzugsweise von ca. 10 µm haben.

4. Messelektrodenpaar nach einem der Ansprüche 1 bis 3, **dadurch gekennzeichnet, dass** es auf einem isolierenden Substrat (15) aufgebracht ist, das vorzugsweise Glas, Silizium/Siliziumoxid oder ein Polymer umfaßt.

5. Messelektrodenpaar nach einem der Ansprüche 1 bis 4, **dadurch gekennzeichnet, dass** die Elektroden (17, 18) Metall, vorzugsweise Gold, Platin, Palladium, Iridium oder Kohlenstoff bzw. eine Kohlenstoffverbindung enthalten.

6. Messelektrodenpaar nach einem der Ansprüche 1 bis 5, **dadurch gekennzeichnet, dass** die Isolationsschicht (19) eine Siliziumverbindung oder eine Polymerschicht aufweist.

7. Messelektrodenpaar nach einem der Ansprüche 1 bis 6, **dadurch gekennzeichnet, dass** die Nanoporen (21) einen Anteil an der Oberfläche (22) der ersten Elektrode (17) von mindestens ca. 5%, vorzugsweise mehr als 60% ausmachen.

8. Biosensor mit zumindest einem Messelektrodenpaar (16) nach einem der Ansprüche 1 bis 7, das auf einem Substrat (15) angeordnet ist.

9. Biosensor nach Anspruch 8, **dadurch gekennzeichnet, dass** auf dem Substrat (15) zumindest eine weitere Elektrode (23, 24) vorgesehen ist, die als Referenz- oder Gegenelektrode dient.

10. Biosensor nach Anspruch 9, **dadurch gekennzeichnet, dass** die weitere Elektrode (23, 24) eine Fläche aufweist, die größer, vorzugsweise mindestens 10 fach größer ist als die Fläche der zweiten Elektrode (18).

11. Biosensor nach einem der Ansprüche 8 bis 10, **dadurch gekennzeichnet, dass** er als Chip mit Zuleitungen (25, 26) für die Elektroden (17, 18) ausgebildet ist.

12. Elektrochemische Zelle mit einem Biosensor (11) nach einem der Ansprüche 8 bis 11, die einen Aufnahmeraum ((13) für einen Elektrolyten (12) aufweist, in dem mit dem Biosensor (11) zu erfassende Moleküle vorhanden sind.

13. Elektrochemische Zelle nach Anspruch 12, **dadurch gekennzeichnet, dass** sie Anschlüsse (14) für eine Ausleseschaltung, vorzugsweise eine Potentiostatenschaltung (31) aufweist.

14. Verwendung des Messelektrodenpaares nach einem der Ansprüche 1 bis 7 zur Erfassung von Molekülen unter Ausnutzung von Redox-Recycling.

15. Verfahren zur Herstellung eines Meßelektrodenpaares (16) aus einem der Ansprüche 1 bis 7, mit den Schritten:
a) Aufbringen einer ersten, vorzugsweise flächigen Elektrode (17) auf einem isolierenden Substrat (15), wobei die Elektrode (17) vorzugsweise eine Schichtdicke von ca. 50 bis ca. 1000 nm, besonders vorzugsweise von ca. 100 bis 200 nm aufweist,
b) Aufbringen einer Isolationsschicht (19) auf der ersten Elektrode (17), wobei die Isolationsschicht (19) eine Dicke von ca. 10 bis ca. 200 nm, vorzugsweise von ca. 50 nm hat.
c) Aufbringen einer nanostrukturierten zweiten Elektrode (18) auf der Isolationsschicht (19), und
d) Ätzen der Isolationsschicht (19) bis zur ersten Elektrode (17), wobei die zweite Elektrode (18) als Ätzmaske dient, um Nanoporen (21) zu erzeugen, die eine lichte Weite von ca. 20 bis ca. 1000 nm, vorzugsweise von ca. 100 nm haben.

16. Verfahren nach Anspruch 15, **dadurch gekennzeichnet, dass** Schritt c) folgende Unterschritte umfasst:
C1) Maskieren der Isolationsschicht (19) mit einer nanostrukturierten Schattenmaske aus Nanopartikeln, die vorzugsweise einen Durchmesser von 20 bis 1000 nm, besonders vorzugsweise von ca. 100 nm aufweisen,
C2) Aufbringen der zweiten Elektrode (18) auf der Isolationsschicht (19), wobei im Bereich der Nanopartikel kein Elektrodenmaterial abgelagert wird, wobei die Elektrode (18) eine Schichtdicke im Bereich des Radius der Nanopartikel, vorzugsweise eine Schichtdicke von ca. 20 bis ca. 500 nm, besonders vorzugsweise von ca. 50 nm aufweist, und
C3) Entfernen der Nanopartikel.

17. Verfahren nach Anspruch 16, bei dem vor Schritt c) die Oberfläche der Isolationsschicht (19) vorbehandelt wird, um eine gleichmäßige Verteilung der Nanopartikel auf der Oberfläche zu erreichen.

18. Verfahren zur Herstellung eines Meßelektrodenpaares (16) aus einem der Ansprüche 1 bis 7, mit den Schritten:
a) Aufbringen einer ersten, vorzugsweise flächigen Elektrode (17) auf einem isolierenden Substrat (15), wobei die Elektrode (17) vorzugsweise eine Schichtdicke von ca. 50 bis ca. 1000 nm, besonders vorzugsweise von ca. 100 bis 200 nm aufweist,
b) Maskieren der ersten Elektrode (17) mit einer nanostrukturierten Schattenmaske aus Nanopartikeln, die vorzugsweise einen Durchmesser von 20 bis 1000 nm, besonders vorzugsweise von ca. 100 nm aufweisen,
c) Aufbringen einer Isolationsschicht (19) auf der ersten Elektrode (17), wobei im Bereich der Nanopartikel kein Isolationsmaterial abgelagert wird, und wobei die Isolationsschicht (19) eine Dicke von ca. 10 bis ca. 200 nm, vorzugsweise von ca. 50 nm hat.
d) Aufbringen einer zweiten Elektrode (18) auf der Isolationsschicht (19), wobei im Bereich der Nanopartikel kein Elektrodenmaterial abgelagert wird, wobei die Elektrode (18) eine Schichtdicke im Bereich des Radius der Nanopartikel, vorzugsweise eine Schichtdicke von ca. 20 bis ca. 500 nm, besonders vorzugsweise von ca. 50 nm aufweist, und
e) Entfernen der Nanopartikel, um Nanoporen (21) zu erzeugen, die eine lichte Weite von ca. 20 bis ca. 1000 nm, vorzugsweise von ca. 100 nm haben.

## Claims

1. A pair of measuring electrodes having a first and a second, preferably in each case sheet-like electrode (17, 18) and an insulation layer (19) arranged between the electrodes (17, 18), wherein one or more nanopores (21) are provided in the second electrode (18), said nanopores extending through the insulation layer (19) to the first electrode (17), the surface (22) of which first electrode is at least partially uncovered in the nanopores (21), whereby the nanopores (21) have an open width of approx. 20 to approx. 1000 nm, preferably of approx. 100 nm, and whereby the insulation layer (19) has a thickness of approx. 10 to approx. 200 nm, preferably of approx. 50 nm.

2. The pair of measuring electrodes as claimed in claim 1, **characterized in that** the nanopores (21) are distributed regularly, preferably randomly.

3. The pair of measuring electrodes according to claim 1 or claim 2, **characterized in that** the electrodes (17, 18) have a diameter of approx. 1 µm to approx. 10 mm, preferably of approx. 10 µm.

4. The pair of measuring electrodes according to anyone of claims 1 to 3, **characterized in that** it is applied to an insulating substrate (15), which preferably comprises glass, silicon/silicon oxide or a polymer.

5. The pair of measuring electrodes as claimed in anyone of claims 1 to 4, **characterized in that** the electrodes (17, 18) contain metal, preferably gold, platinum, palladium, iridium or carbon or a carbon compound.

6. The pair of measuring electrodes according to anyone of claims 1 to 5, **characterized in that** the insulation layer (19) includes a silicon compound or a polymer layer.

7. The pair of measuring electrodes according to anyone of claims 1 to 6, **characterized in that** the nanopores (21) form a proportion of at least approx. 5%, preferably more than 60%, at the surface (22) of the first electrode (17).

8. A biosensor having at least one pair (16) of measuring electrodes according to anyone of claims 1 to 7, which pair of measuring electrodes is arranged on a substrate (15).

9. The biosensor according to claim 8, **characterized in that** at least one further electrode (23, 24), which serves as a reference electrode or counter-electrode, is provided on the substrate (15).

10. The biosensor according to claim 9, **characterized in that** the further electrode (23, 24) comprises a surface area which is greater, preferably at least 10 times greater, than the surface area of the second electrode (18).

11. The biosensor according to anyone of claims 8 to 10, **characterized in that** it is designed as a chip with supply lines (25, 26) for the electrodes (17, 18).

12. An electrochemical cell having the biosensor (11) according to anyone of claims 8 to 10, which cell comprises a receiving space (13) for an electrolyte (12) in which molecules are present which are to be recorded using the biosensor (11).

13. The electrochemical cell according to claim 12, **characterized in that** it comprises terminals (14) for a readout circuit, preferably a potentiostat circuit (31).

14. Use of the measuring electrode pair according to anyone of claims 1 to 7 for recording molecules by utilizing redox recycling.

15. A process for producing the pair (16) of measuring electrodes according to anyone of claims 1 to 7, comprising the steps of:
a) applying a first, preferably sheet-like electrode (17) to an insulating substrate (15), the electrode (17) preferably having a layer thickness of approx. 50 to approx. 1000 nm, particularly preferably of approx. 100 to 200 nm,
b) applying an insulation layer (19) to the first electrode (17), whereby the insulation layer (19) has a layer thickness of approx. 10 to approx. 200 nm, particularly preferably of approx. 50 nm,
c) applying a nanostructured second electrode (18) to the insulation layer (19), and
d) etching the insulation layer (19) as far as the first electrode (17), with the second electrode (18) serving as an etching mask, in order to produce nanapores (21) having an open width of approx. 20 to approx. 1000 nm, preferably of approx. 100 nm.

16. The process of claim 15, **characterized in that** step c) comprises the following sub-steps:
C1) masking the insulation layer (19) using a nanostructured shadow mask made from nanoparticles which preferably have a diameter of 20 to 1000 nm, particularly preferably of approx. 100 nm,
C2) applying the second electrode (18) to the insulation layer (19), without any electrode material being deposited in the region of the nanoparticles, the electrode (18) having a layer thickness in the region of the radius of the nanoparticles, preferably, layer thickness of approx. 20 to approx. 500 nm, particularly preferably of approx. 50 nm, and
C3) removing the nanoparticles.

17. The process of claim 16, in which, prior to step c), the surface of the insulation layer (19) is pretreated in order to achieve a uniform distribution of the nanoparticles on the surface.

18. A process for producing the pair (16) of measuring electrodes according to anyone of claims 1 to 7, comprising the steps of:
a) applying a first, preferably sheet-like electrode (17) to an insulating substrate (15), the electrode (17) preferably having a layer thickness of approx. 50 to approx. 1000 nm, particularly preferably of approx. 100 to 200 nm,
b) masking the first electrode (17) using a nanostructured shadow mask made from nanoparticles, which preferably have a diameter of 20 to 1000 nm, particularly preferably of approx. 100 nm,
c) applying an insulation layer (19) to the first electrode (17), without any insulation material being deposited in the region of the nanoparticles, and whereby the insulation layer (19) has a thickness of approx. 10 to approx. 200 nm, preferably of approx. 50 nm,
d) applying a second electrode (18) to the insulation layer (19), without any electrode material being deposited in the region of the nanoparticles, the electrode (18) having a layer thickness in the region of the radius of the nanoparticles, preferably a layer thickness of approx. 20 to approx. 500 nm, particularly preferably of approx. 50 nm, and
e) removing the nanoparticles, in order to produce nanopores (21) having an open width of approx. 20 to approx. 1000 nm, preferably of approx. 100 nm.

## Revendications

1. Paire d'électrodes de mesure avec une première et une deuxième électrode (17, 18), de préférence respectivement planes, ainsi qu'une couche isolante (19) disposée entre les électrodes (17, 18), une ou plusieurs nanopores (21) étant prévues dans la deuxième électrode (18), lesquelles s'étendent à travers la couche isolante (19) jusqu'à la première électrode (17), dont la superficie (22) dans les nanopores (21) est au moins partiellement dégagée, les nanopores (21) présentant une largeur d'ouverture d'environ 20 à environ 1000 nm, de préférence d'environ 100 nm, et la couche isolante (19) présentant une épaisseur allant d'environ 10 à environ 200 nm, de préférence d'environ 50 nm.

2. Paire d'électrodes de mesure selon la revendication 1, **caractérisée en ce que** les nanopores (21) sont disposées de manière régulière, de préférence avec une répartition statistique.

3. Paire d'électrodes de mesure selon la revendication 1 ou 2, **caractérisée en ce que** les électrodes (17, 18) présentent un diamètre allant d'environ 1 µm à environ 10 mm, de préférence d'environ 10 µm.

4. Paire d'électrodes de mesure selon l'une quelconque des revendications 1 à 3, **caractérisée en ce qu'**elle est placée sur un substrat isolant (15), lequel comprend de préférence du verre, du silicium/oxyde de silicium ou un polymère.

5. Paire d'électrodes de mesure selon l'une quelconque des revendications 1 à 4, **caractérisée en ce que** les électrodes (17, 18) contiennent du métal, de préférence de l'or, du platine, du palladium, de l'iridium ou du carbone et/ou un composé carboné.

6. Paire d'électrodes de mesure selon l'une quelconque des revendications 1 à 5, **caractérisée en ce que** la couche isolante (19) présente un composé silicié ou une couche polymère.

7. Paire d'électrodes de mesure selon l'une quelconque des revendications 1 à 6, **caractérisée en ce que** les nanopores (21) représentent un pourcentage de la superficie (22) de la première électrode (17) d'au moins environ 5 %, et de préférence de plus de 60 %.

8. Biocapteur avec au moins une paire d'électrodes de mesure (16) selon l'une quelconque des revendications 1 à 7, laquelle est disposée sur un substrat (15).

9. Biocapteur selon la revendication 8, **caractérisé en ce que** l'on prévoit au moins une autre électrode (23, 24) sur le substrat (15), laquelle sert d'électrode de référence ou de contre-électrode.

10. Biocapteur selon la revendication 9, **caractérisé en ce que** l'autre électrode (23, 24) présente une surface, laquelle est plus grande, de préférence 10 fois plus grande que la surface de la deuxième électrode (18).

11. Biocapteur selon l'une quelconque des revendications 8 à 10, **caractérisé en ce qu'**il est réalisé en tant que puce avec des fils (25, 26) pour les électrodes (17, 18).

12. Cellule électrochimique avec un biocapteur (11) selon l'une quelconque des revendications 8 à 11 ; laquelle présente un logement (13) pour un électrolyte (12), dans lequel se trouvent des molécules à détecter par le biocapteur (11).

13. Cellule électrochimique selon la revendication 12, **caractérisée en ce qu'**elle présente des bornes (14) pour un circuit de sélection, de préférence un circuit potentiostatique (31).

14. Utilisation de la paire d'électrodes de mesure selon l'une quelconque des revendications 1 à 7 pour détecter des molécules en faisant appel à du recyclage redox.

15. Procédé pour la fabrication d'une paire d'électrodes de mesure (16) selon l'une quelconque des revendications 1 à 7, avec les étapes suivantes :
a) application d'une première électrode (17), de préférence plane, sur un substrat isolant (15), l'électrode (17) présentant une épaisseur de couche de préférence comprise entre environ 50 et environ 1000 nm, et de manière particulièrement préférée d'environ 100 à 200 nm,
b) application d'une couche isolante (19) sur la première électrode (17), la couche isolante (19) présentant une épaisseur allant d'environ 10 à environ 200 nm, de préférence d'environ 50 nm,
c) application d'une deuxième électrode à nanostructure (18) sur la couche isolante (19), et
d) gravure chimique de la couche isolante (19) jusqu'à la première électrode (17), la deuxième électrode (18) servant de masque d'incision, afin de produire des nanopores (21), lesquelles présentent une largeur d'ouverture allant d'environ 20 à environ 1000 nm, de préférence d'environ 100 nm.

16. Procédé selon la revendication 15, **caractérisé en ce que** l'étape c) comprend les étapes intermédiaires suivantes :
c1) masquage de la couche isolante (19) avec un shadow-mask à nanostructure de nanoparticules, lesquelles présentent de préférence un diamètre de 20 à 1000 nm, et de manière particulièrement préférée d'environ 100 nm,
c2) application de la deuxième électrode (18) sur la couche isolante (19), aucune matière d'électrode n'étant déposée dans la zone des nanoparticules, l'électrode (18) présentant une épaisseur de couche dans la plage du rayon de la nanoparticule, de préférence une épaisseur de couche allant d'environ 20 à environ 500 nm, de manière particulièrement préférée d'environ 50 nm, et
c3) élimination des nanoparticules.

17. Procédé selon la revendication 16, avec lequel, avant l'étape c), la superficie de la couche isolante (19) est prétraitée, afin d'obtenir une répartition régulière des nanoparticules à la superficie.

18. Procédé pour la fabrication d'une paire d'électrodes de mesure (16) selon l'une quelconque des revendications 1 à 7, avec les étapes suivantes :
a) application d'une première électrode (17), si possible plane, sur un substrat isolant (15), l'électrode (17) présentant une épaisseur de couche de préférence comprise entre environ 50 et environ 1000 nm, et de manière particulièrement préférée d'environ 100 à 200 nm,
b) masquage de la première électrode (17) avec un shadow-mask à nanostructure de nanoparticules, lesquelles présentent de préférence un diamètre de 20 à 1000 nm, et de manière particulièrement préférée d'environ 100 nm,
c) application d'une couche isolante (19) sur la première électrode (17), aucune matière isolante n'étant déposée dans la zone des nanoparticules, et la couche isolante (19) présentant une épaisseur d'environ 10 à environ 200 nm, de préférence d'environ 50 nm,
d) application d'une deuxième électrode (18) sur la couche isolante (19), aucune matière d'électrode n'étant déposée dans la zone des nanoparticules, l'électrode (18) présentant une épaisseur de couche dans la plage du rayon des nanoparticules, de préférence une épaisseur de couche allant d'environ 20 à environ 500 nm, de manière particulièrement préférée d'environ 50 nm, et
e) élimination des nanoparticules, afin de produire des nanopores (21), lesquels présentent une largeur d'ouverture allant d'environ 20 à environ 1000 nm, de préférence d'environ 100 nm.
